# EUROPÄISCHE PATENTSCHRIFT

(11) **EP 4 495 727 B1**
(45) Veröffentlichungstag und Bekanntmachung des Hinweises auf die Patenterteilung: **18.03.2026**
(21) Anmeldenummer: 24176965.2
(22) Anmeldetag: 21.05.2024
(51) Int. Cl.: G05D 1/248, G05D 1/648, A01B 69/04, A01B 79/00

(54) **LANDWIRTSCHAFTLICHE ARBEITSMASCHINE FÜR FELDBESTANDSPFLEGE**
AGRICULTURAL MACHINE FOR FIELD STOCK MAINTENANCE
MACHINE DE TRAVAIL AGRICOLE POUR SOINS DE STOCK DE CHAMP

(30) Priorität: 18.07.2023 DE 102023118902
(43) Veröffentlichungstag der Anmeldung: 22.01.2025
(73) Patentinhaber: CLAAS E-Systems GmbH, 49201 Dissen (DE)
(72) Erfinder: Kruse, Alexander, 33818 Leopoldshöhe (DE); Uhlemann, Matthias, 49326 Melle (DE); Meyer zu Helligen, Lars Peter, 32139 Spenge (DE); Behmenburg, Jan, 58730 Fröndenberg (DE); Hemsen, Moritz, 59872 Meschede (DE); Monkenbusch, Robin, 33378 Rheda-Wiedenbrück (DE); Schoch, Bernd, 33334 Gütersloh (DE)
(74) Vertreter: CLAAS Gruppe

(56) Entgegenhaltungen:
- DE-A1- 102011 121 433
- JP-A- 2012 120 449

## Beschreibung

Die vorliegende Erfindung betrifft eine landwirtschaftliche Arbeitsmaschine zum landwirtschaftlichen Einsatz auf einem landwirtschaftlichen Feld, welches einen ungeernteten Feldbestand und Fahrgassen aufweist.

In der modernen Landwirtschaft werden mit mehreren und/oder unterschiedlichen landwirtschaftlichen Arbeitsmaschinen mehrere unterschiedliche landwirtschaftlichen Felder gepflegt, wobei vor dieser Pflege die Fahrgassen durch eine andere landwirtschaftliche Arbeitsmaschine während einer Aussaat, also während des Ausbringens von Saatgut, auf diesem landwirtschaftlichen Feld festgelegt wird.

Die US 10,729,055 B2 offenbart eine Steuerung eines landwirtschaftlichen Arbeitsfahrzeugsystems, die so konfiguriert ist, dass ein Satz von Schwadwegen empfangen wird und mehrere mögliche Verbindungspfade zwischen den Schwadwegen bestimmt werden. Diese Schwaden bilden einen geernteten Feldbestand aus. Dieses Arbeitsfahrzeugsystems ist nicht für die Pflege des einen ungeernteten Feldbestandes geeigent.

Die DE 10 2011 121433 A1 beschreibt die Automatisierung wiederkehrender Feld- und Hofarbeiten durch Anlernen von Arbeitszyklen in einer Ansteuervorrichtung mit Speicher. GPS/ Ortung dient u. a. der Feldende-Erkennung und der Aufzeichnung der vom Fahrer vorgeführten Sequenzen; das Vorgewende wird angelernt und anschließend als Befehlssequenz abgefahren.

Die JP 2012 120449 A offenbart ein Düngesystem, das anhand von Setzpunkten P1-P3 und einer Referenzlinie L0 Headland- und Innenbahnen L11-L14, L21-L23 berechnet und setzt; die Führung erfolgt entlang dieser intern bestimmten Routen unter Nutzung der Positionsinformation.

Der vorliegenden Erfindung liegt im Gegensatz zu diesem Stand der Technik die Aufgabe zugrunde, eine landwirtschaftliche Arbeitsmaschine anzugeben, die den Landwirt bei einer vorhergehend geplanten Pflege eines ungeernteten Feldbestandes des landwirtschaftlichen Feldes derart unterstützt, dass insbesondere einer unterwünschten und/oder einer unpassenden Fahrt auf dem landwirtschaftlichen Feld entgegenwirkt wird.

Diese Aufgabe wird erfindungsgemäß durch die Gegenstände der unabhängigen Ansprüche gelöst. Vorteilhafte Ausführungsformen sind Gegenstand der abhängigen Ansprüche. Die vorliegende Erfindung beruht auf dem allgemeinen Gedanken, die landwirtschaftliche Arbeitsmaschine bezüglich des landwirtschaftlichen Feldes derart einzustellen, dass die landwirtschaftliche Arbeitsmaschine innerhalb eines Vorgewendebereiches des landwirtschaftlichen Feldes entlang einer Fahrgasse des Vorgewendebereiches fährt.

Die erfindungsgemäße landwirtschaftliche Arbeitsmaschine ist zum landwirtschaftlichen Einsatz auf einem landwirtschaftlichen Feld ausgebildet, welches wenigstens einen Feldbereich und wenigstens einen Vorgewendebereich aufweist. Der Feldbereich und/oder der Vorgewendebereich weisen einen ungeernteten Feldbestand und Fahrgassen auf.

Diese landwirtschaftliche Arbeitsmaschine weist einen Traktor und mit wenigstens einem am Traktor gekoppelten, insbesondere lösbar gekoppelten, Anbaugerät zur Pflege des ungeernteten Feldbestandes des landwirtschaftlichen Feldes auf.

Zusätzlich weist die landwirtschaftliche Arbeitsmaschine, insbesondere der Traktor, eine Einstellvorrichtung auf, die dazu vorgesehen und eingerichtet ist, die landwirtschaftliche Arbeitsmaschine in Abhängigkeit satellitenbasierter Informationen bezüglich der Fahrgassen des landwirtschaftlichen Feldes und in Abhängigkeit satellitenbasierter Positionsinformationen der landwirtschaftlichen Arbeitsmaschine bezüglich des landwirtschaftlichen Feldes derart einzustellen, dass die landwirtschaftliche Arbeitsmaschine innerhalb eines Vorgewendebereiches des landwirtschaftlichen Feldes entlang einer Fahrgasse des Vorgewendebereiches fährt.

Hierdurch können unerwünschte Einwirkungen seitens der landwirtschaftliche Arbeitsmaschine auf den ungeernteten Feldbestand im Vorgewendebereich reduziert und/oder verhindert werden.

Die Einstellvorrichtung kann als Steuer- und/oder Regelvorrichtung ausgebildet sein, die eine Einstellung durch eine Steuerung und/oder Regelung der landwirtschaftlichen Arbeitsmaschine, insbesondere von Komponenten der landwirtschaftlichen Arbeitsmaschine, bewirkt. Die Einstellvorrichtung kann eine Rechenvorrichtung und einen Datenspeicher aufweisen. Unter eingerichtet kann zu verstehen sein, dass die Einstellvorrichtung dazu ausgebildet und/oder programmiert ist.

Die Einstellvorrichtung kann dazu vorgesehen und eingerichtet sein, den Traktor und das Anbaugerät derart einzustellen, dass die landwirtschaftliche Arbeitsmaschine derart entlang der Fahrgassen fährt, sodass einer nicht tolerierbaren Beschädigung des ungeernteten Feldbestandes entgegengewirkt.

Die satellitenbasierte Informationen, wie die satellitenbasierten Informationen bezüglich der Fahrgassen und die satellitenbasierten Positionsinformationen der landwirtschaftlichen Arbeitsmaschine bezüglich des landwirtschaftlichen Feldes, können jeweils mittels einer Positionsbestimmungseinrichtung zur satellitenbasierten Erfassung einer Position einer landwirtschaftlichen Arbeitsmaschine bezüglich des landwirtschaftlichen Feldes erfasst worden sein. Die Positionsbestimmungseinrichtung kann zur Positionsbestimmung mittels Satellitennavigationssignalen ausgebildet und/oder programmiert sein, um beispielsweise Positionsdaten bereitzustellen. Hierbei kann wenigstens eine Satellitenvorrichtung zur Positionsbestimmung der landwirtschaftlichen Arbeitsmaschine bezüglich landwirtschaftlichen Feldes eingesetzt werden. Die Satellitenvorrichtung kann einen und/oder mehrere GNSS-Satelliten umfassen. Die Satellitenvorrichtung kann NAVSTAR-GPS-, GLONASS-, Galileo, Beidou-, GPS- und/oder Galileo-Satelliten umfassen. Die Positionsbestimmungseinrichtung kann zur Positionsbestimmung gemäß des RTK-(Real-Time-Kinematic-) Verfahrens ausgebildet und/oder programmiert sein, bei der ergänzend zu den Satellitensignalen ein sogenanntes RTK-Signal eingesetzt wird, um die Position der landwirtschaftlichen Arbeitsmaschine auf dem landwirtschaftlichen Feld zu ermitteln. Das RTK-Signal kann von einer stationären Bodenstation erzeugt werden. Das RTK-Signal kann von einem außerhalb der landwirtschaftlichen Arbeitsmaschine ausgebildeten computerbasierten Rechenzentrum erzeugt werden, welches Korrekturdaten computerbasiert berechnet und diese Korrekturdaten der Einstellvorrichtung der landwirtschaftlichen Arbeitsmaschine über Mobilfunk übermittelt. Hierbei kann die stationäre Bodenstation und/oder das computerbasierte Rechenzentrum außerhalb des landwirtschaftlichen Feldes angeordnet sein.

Bei einer vorteilhaften Weiterbildung der erfindungsgemäßen Lösung ist vorgesehen, dass die satellitenbasierten Informationen bezüglich der Fahrgassen von einer, insbesondere anderen, landwirtschaftlichen Arbeitsmaschine während einer Aussaat auf diesem landwirtschaftlichen Feld erfasst wurden, und/oder dass die satellitenbasierten Positionsinformationen der erfindungsgemäßen landwirtschaftlichen Arbeitsmaschine bezüglich des landwirtschaftlichen Feldes während der Pflege des ungeernteten Feldbestandes und daher erst nach der Aussaat auf diesem landwirtschaftlichen Feld erfasst werden. Mit anderen Worten ausgedrückt, wurden die satellitenbasierten Informationen bezüglich der Fahrgassen zeitlich vor dem Startzeitpunkt der Pflege des ungeernteten Feldbestandes, insbesondere vollständig, erfasst und datentechnisch in einem Datenspeicher gespeichert, während die Positionsinformationen der erfindungsgemäßen landwirtschaftlichen Arbeitsmaschine während der Pflege des ungeernteten Feldbestandes erfasst und, insbesondere zeitverzögerungsfrei oder lediglich mit minimaler Zeitverzögerung, einstellungstechnisch verwendet werden. Es kann vorgesehen sein, dass bei der Aussaat auf diesem landwirtschaftlichen Feld und bei der Pflege des ungeernteten Feldbestandes der gleiche und/oder identische Traktor eingesetzt wird, um die satellitenbasierten Informationen und/oder satellitenbasierten Positionsinformationen zu erfassen.

Bei einer vorteilhaften Weiterbildung der erfindungsgemäßen Lösung ist vorgesehen, dass in einem Datenspeicher für mehrere landwirtschaftliche Felder die satellitenbasierten Informationen bezüglich Fahrgassen hinterlegt sind, wobei die Einstellvorrichtung dazu vorgesehen und eingerichtet ist, in Abhängigkeit der satellitenbasierten Positionsinformationen der erfindungsgemäßen landwirtschaftliche Arbeitsmaschine aus dem Datenspeicher die hinterlegten satellitenbasierten Informationen bezüglich Fahrgassen zu ermitteln und zu verwenden, die sich auf das landwirtschaftlichen Feld beziehen, auf dem sich die landwirtschaftliche Arbeitsmaschine befindet und/oder planungstechnisch befinden wird. Die Einstellvorrichtung kann datentechnisch kommunizierend mit dem Datenspeicher verbunden sein.

Bei einer vorteilhaften Weiterbildung der erfindungsgemäßen Lösung ist vorgesehen, dass die Einstellvorrichtung dazu vorgesehen und eingerichtet ist, die landwirtschaftliche Arbeitsmaschine in Abhängigkeit messtechnisch erfasster Betriebsparameter und den satellitenbasierten Informationen derart einzustellen, dass die landwirtschaftliche Arbeitsmaschine innerhalb eines Feldbereiches des landwirtschaftlichen Feldes ein erste Fahrgasse und eine davon beabstandete zweite Fahrgasse abfährt, wobei die Einstellvorrichtung zusätzlich dazu vorgesehen und eingerichtet ist, die landwirtschaftliche Arbeitsmaschine derart einzustellen, dass landwirtschaftliche Arbeitsmaschine für eine Fahrt von der ersten Fahrgasse in die zweite Fahrgasse des Feldbereiches den hierzu passenden Teil der Fahrgasse des Vorgewendebereiches abfährt bzw. entlangfährt.

Die landwirtschaftliche Arbeitsmaschine kann wenigstens eine Messeinrichtung zur messtechnischen Erfassung des Betriebsparameters der landwirtschaftlichen Arbeitsmaschine, insbesondere von Komponenten der landwirtschaftlichen Arbeitsmaschine und/oder der Umgebung der landwirtschaftlichen Arbeitsmaschine, aufweisen. Die Messeinrichtung kann Sensoreinrichtungen aufweisen.

Bei einer vorteilhaften Weiterbildung der erfindungsgemäßen Lösung ist vorgesehen, dass die landwirtschaftliche Arbeitsmaschine ein frontseitiges Anbaugerät und/oder ein heckseitiges Anbaugerät aufweist.

Bei einer vorteilhaften Weiterbildung der erfindungsgemäßen Lösung ist vorgesehen, dass die Einstellvorrichtung dazu vorgesehen und eingerichtet ist, in Abhängigkeit der Fahrgassen das frontseitige Anbaugerät und/oder das heckseitige Anbaugerät einzustellen. Die Einstellvorrichtung kann dazu vorgesehen und eingerichtet sein, das frontseitige Anbaugerät und/oder das heckseitige Anbaugerät in Abhängigkeit der der Fahrgasse des Vorgewendebereiches einzustellen.

Bei einer vorteilhaften Weiterbildung der erfindungsgemäßen Lösung ist vorgesehen, dass die Einstellvorrichtung dazu vorgesehen und eingerichtet ist, das am Traktor gekoppelte Anbaugerät derart einzustellen, dass dieses Anbaugerät während des Einsatzes auf einem landwirtschaftlichen Feld eine Beabstandung zum Erdboden des landwirtschaftlichen Feldes und/oder eine Beabstandung zum ungeernteten Feldbestand des landwirtschaftlichen Feldes aufweist. Hierdurch kann einer unerwünschten Beschädigung des ungeernteten Feldbestandes durch das Anbaugerät entgegengewirkt werden.

Bei einer vorteilhaften Weiterbildung der erfindungsgemäßen Lösung ist vorgesehen, dass ein Anbaugerät als ein Pflanzenschutzgerät zum Ausbringen von Pflanzenschutzmittel auf dem ungeernteten Feldbestand ausgebildet ist und/oder dass ein Anbaugerät als ein Düngerstreuer zum Ausbringen von Düngemittel auf dem ungeernteten Feldbestand ausgebildet ist.

Bei einer vorteilhaften Weiterbildung der erfindungsgemäßen Lösung ist vorgesehen, dass die erste Fahrgasse und die zweite Fahrgasse des Feldbereiches jeweils parallel zu einer Längsachse des landwirtschaftlichen Feld ausgerichtet sind, wobei die Fahrgasse des Vorgewendebereiches wenigstens einen Teil aufweist, der sich parallel zu einer Querachse des landwirtschaftlichen Feld erstreckt, wobei die Längsachse und die Querachse quer und/oder senkrecht zueinander ausgerichtet sind.

Bei einer vorteilhaften Weiterbildung der erfindungsgemäßen Lösung ist vorgesehen, dass die erste Fahrgasse und die zweite Fahrgasse des Feldbereiches bezüglich der Querachse voneinander beabstandet sind, wobei der Teil der Fahrgasse des Vorgewendebereiches, der sich parallel zur Querachse erstreckt, bezüglich der Querachse zwischen der ersten Fahrgasse und der zweiten Fahrgasse des Feldbereiches ausgebildet ist.

Bei einer vorteilhaften Weiterbildung der erfindungsgemäßen Lösung ist vorgesehen, dass der messtechnisch erfasste Betriebsparameter eine Feldbestandsinformation bezüglich des ungeernteten Feldbestandes, eine Wetterinformation, eine weitere Standortinformation, eine weitere Feldinformation, einen weiteren Arbeitsmaschinenparameter und/oder einen Betriebszustand der landwirtschaftlichen Arbeitsmaschine betrifft und/oder aufweist.

Bei einer vorteilhaften Weiterbildung der erfindungsgemäßen Lösung ist vorgesehen, dass die weiteren Feldinformation Informationen bezüglich Feldgrenzen des landwirtschaftlichen Feldes aufweisen, wobei die Einstellvorrichtung dazu vorgesehen und eingerichtet ist, die landwirtschaftliche Arbeitsmaschine derart einzustellen, dass die landwirtschaftliche Arbeitsmaschine während der Pflege des ungeernteten Feldbestandes die Feldgrenzen nicht überschreitet.

Bei einer vorteilhaften Weiterbildung der erfindungsgemäßen Lösung ist vorgesehen, dass die satellitenbasierten Informationen mittels wenigstens einem Satelliten erfasst wurden und/oder erfasst werden. Diese satellitenbasierten Informationen können von mehreren Satelliten, insbesondere von wenigstens drei oder vier Satelliten, erfasst worden sein.

Ferner betrifft die Erfindung die datentechnische, insbesondere computerimplementierte, Bereitstellung von satellitenbasierten Informationen bezüglich Fahrgassen, die von einer landwirtschaftlichen Arbeitsmaschine während einer Aussaat auf einem landwirtschaftlichen Feld erfasst wurden, für eine einstellungstechnische Verwendung mittels einer Einstellvorrichtung einer erfindungsgemäßen landwirtschaftlichen Arbeitsmaschine, um diese, insbesondere weitere, landwirtschaftliche Arbeitsmaschine während einer Pflege eines durch die Aussaat entstandenen ungeernteten Feldbestandes im Vorgewendebereich des landwirtschaftlichen Feldes einzustellen. Hierbei kann die erfindungsgemäße landwirtschaftliche Arbeitsmaschine zuvor als auch nachfolgend beschriebene Merkmale aufweisen.

Weitere wichtige Merkmale und Vorteile der Erfindung ergeben sich aus den Unteransprüchen, aus der Zeichnung und aus der zugehörigen Figurenbeschreibung anhand der Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein bevorzugtes Ausführungsbeispiel der Erfindung ist in der Zeichnung dargestellt und wird in der nachfolgenden Beschreibung näher erläutert, wobei sich gleiche Bezugszeichen auf gleiche oder ähnliche oder funktional gleiche Komponenten beziehen.

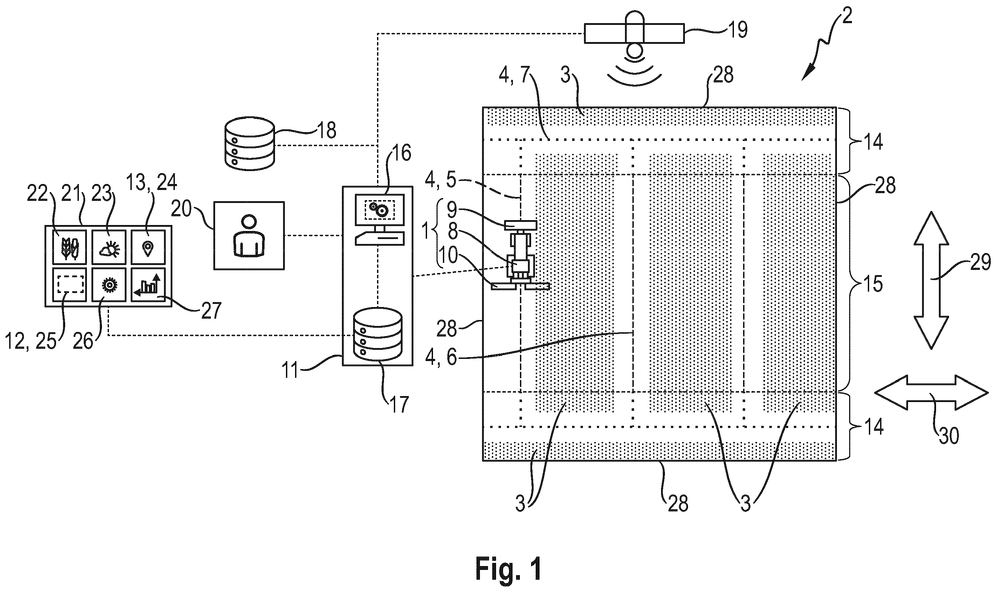

Fig. 1 zeigt eine Draufsicht auf die erfindungsgemäße landwirtschaftliche Arbeitsmaschine 1 während der Pflege des ungeernteten Feldbestandes 3 eines landwirtschaftlichen Feldes 2, welches durch Feldgrenzen 28 begrenzt ist. Innerhalb der Feldgrenzen 28 ist wenigstens ein Feldbereich 15 und wenigstens einen Vorgewendebereich 14 ausgebildet. Der Feldbereich 15 und die Vorgewendebereiche 14 sind symbolisch durch eine Zwischengrenze voneinander getrennt angedeutet dargestellt.

Zeitlich vor der Situation, die in der Fig. 1 dargestellt ist, wurde von einer anderen und nicht dargestellten landwirtschaftlichen Arbeitsmaschine eine Aussaat vorgenommen, wobei währenddessen diese andere landwirtschaftlichen Arbeitsmaschine u.a. entlang der Fahrgassen 4, 5, 6, 7 gefahren ist und hierbei die satellitenbasierten Informationen 12 bezüglich der Fahrgassen 4, 5, 6, 7 während der Aussaat auf diesem landwirtschaftlichen Feld (2), insbesondere unter Zuhilfenahme wenigstens eines Satelliten 19, erfasst.

Die Fahrgassen 5 und 6 sind Fahrgassen 4 des Feldbereiches 15, während die Fahrgasse 7 eine Fahrgassen 4 des Vorgewendebereiches 14.

Die in der Fig. 1 dargestellte landwirtschaftliche Arbeitsmaschine 1 weist einen Traktor 8 mit einem ein frontseitigen Anbaugerät 9 und einem heckseitiges Anbaugerät 10. Außerdem weist die landwirtschaftliche Arbeitsmaschine 1 eine Einstellvorrichtung 11 auf, die eine Rechenvorrichtung 16 und einen Datenspeicher 17 aufweist. Die Einstellvorrichtung 11 ist dazu vorgesehen und eingerichtet ist, die landwirtschaftliche Arbeitsmaschine 1 in Abhängigkeit der satellitenbasierten Informationen 12 bezüglich der Fahrgassen 4, 5, 6, 7 des landwirtschaftlichen Feldes 2 und in Abhängigkeit satellitenbasierter Positionsinformationen 13 der landwirtschaftliche Arbeitsmaschine 1 bezüglich des landwirtschaftlichen Feldes 2 während der Feldbestandspflege derart einzustellen, dass die landwirtschaftliche Arbeitsmaschine 1 innerhalb des Vorgewendebereiches 14 des landwirtschaftlichen Feldes 2 entlang der Fahrgasse 7 des Vorgewendebereiches 14 fährt.

Hierdurch können unerwünschte Einwirkungen seitens der landwirtschaftliche Arbeitsmaschine 1 auf den ungeernteten Feldbestand 3 im Vorgewendebereich 14 reduziert und/oder verhindert werden.

Die die satellitenbasierten Informationen 12 bezüglich der Fahrgassen 4, 5, 6, 7 wurden zeitlichen vor dem Startzeitpunkt der Pflege des ungeernteten Feldbestandes 3 erfasst und datentechnisch in einem Datenspeicher 17 innerhalb der Einstellvorrichtung 11 und/oder einem externen Datenspeicher 18 außerhalb der Einstellvorrichtung 11 gespeichert, während die Positionsinformationen der erfindungsgemäßen landwirtschaftlichen Arbeitsmaschine während der Pflege des ungeernteten Feldbestandes erfasst und, insbesondere zeitverzögerungsfrei oder lediglich mit minimaler Zeitverzögerung, einstellungstechnisch verwendet werden.

In dem internen Datenspeicher 17 und/oder externen Datenspeicher 18 können für mehrere landwirtschaftliche Felder die satellitenbasierten Informationen 12 bezüglich Fahrgassen 4, 5, 6, 7 hinterlegt sein, wobei die Einstellvorrichtung 11 dazu vorgesehen und eingerichtet ist, in Abhängigkeit der satellitenbasierten Positionsinformationen 13 der landwirtschaftliche Arbeitsmaschine 1 aus dem entsprechenden Datenspeicher 17, 18 die hinterlegte satellitenbasierten Informationen 12 bezüglich der Fahrgassen 4, 5, 6, 7 zu ermitteln und zu verwenden, die sich auf das landwirtschaftlichen Feld 2 beziehen, auf dem sich die landwirtschaftliche Arbeitsmaschine 1 befindet und/oder befinden wird.

Die Einstellvorrichtung 11 ist dazu vorgesehen und eingerichtet, die landwirtschaftliche Arbeitsmaschine 1 in Abhängigkeit messtechnisch erfasster Betriebsparameter und den satellitenbasierten Informationen 12, 13 derart einzustellen, dass die landwirtschaftliche Arbeitsmaschine 1 innerhalb eines Feldbereiches 15 des landwirtschaftlichen Feldes 2 eine erste Fahrgasse 5 und eine davon beabstandete zweite Fahrgasse 6 abfährt, wobei die Einstellvorrichtung 11 außerdem dazu vorgesehen und eingerichtet ist, die landwirtschaftliche Arbeitsmaschine 1 derart einzustellen, dass die landwirtschaftliche Arbeitsmaschine 1 für eine Fahrt von der ersten Fahrgasse 5 in die zweite Fahrgasse 6 des Feldbereiches 15 den hierzu passenden Teil der Fahrgasse 7 des Vorgewendebereiches 14 abfährt.

Die erste Fahrgasse 5 und die zweite Fahrgasse 6 des Feldbereiches 15 sind jeweils parallel zu einer Längsachse 29 des landwirtschaftlichen Feld 2 ausgerichtet, wobei die Fahrgasse 7 des Vorgewendebereiches 14 wenigstens einen Teilbereich aufweist, der sich parallel zu einer Querachse 30 des landwirtschaftlichen Feld 2 erstreckt, wobei die Längsachse 29 und die Querachse 30 quer und/oder senkrecht zueinander ausgerichtet sind. Mit anderen Worten ausgedrückt, sind die Längsachse 29 und ein Teilbereich der Querachse 30 nicht parallel zueinander ausgerichtet.

Die erste Fahrgasse 5 und die zweite Fahrgasse 6 des Feldbereiches 15 sind bezüglich der Querachse 30 voneinander beabstandet, wobei der Teil der Fahrgasse 7 des Vorgewendebereiches 14, der sich parallel zur Querachse 30 erstreckt, bezüglich der Querachse 30 zwischen der ersten Fahrgasse 5 und der zweiten Fahrgasse 6 des Feldbereiches 15 ausgebildet ist.

Zusätzlich kann die Einstellvorrichtung 11 dazu vorgesehen und eingerichtet sein, in Abhängigkeit der Fahrgassen 4, 5, 6, 7 das frontseitige Anbaugerät 9 und/oder das heckseitige Anbaugerät 10 einzustellen.

Das Anbaugerät 9, 10 kann als ein Pflanzenschutzgerät zum Ausbringen von Pflanzenschutzmittel auf dem ungeernteten Feldbestand 3 und/oder als Düngerstreuer zum Ausbringen von Düngemittel auf dem ungeernteten Feldbestand 3 ausgebildet sein.

Die Einstellvorrichtung 11 kann dazu vorgesehen und eingerichtet ist, das am Traktor 8 gekoppelte Anbaugerät 9, 10 derart einzustellen, dass dieses Anbaugerät 9, 10 während des Einsatzes auf dem landwirtschaftlichen Feld 2 eine Beabstandung zum Erdboden des landwirtschaftlichen Feldes 2 und/oder eine Beabstandung zum ungeernteten Feldbestand 3 aufweist. Hierdurch wird ein Fahrer 20 der landwirtschaftliche Arbeitsmaschine 1 zusätzlich unterstützt.

Der messtechnisch erfasste Betriebsparameter kann eine Feldbestandsinformation 22 bezüglich des ungeernteten Feldbestandes, eine Wetterinformation 23, eine weitere Standortinformation 24, eine weitere Feldinformation 25, einen weiteren Arbeitsmaschinenparameter 26 und/oder einen Betriebszustand 27 der landwirtschaftlichen Arbeitsmaschine 1 betreffen, der und/oder die in einem Datensatz 21 des Datenspeichers 17 und/oder 18 hinterlegt sind.

Die weiteren Feldinformation 25 können Informationen bezüglich der Feldgrenzen 28 des landwirtschaftlichen Feldes 2 aufweisen, wobei die Einstellvorrichtung 11 dazu vorgesehen und eingerichtet sein kann, die landwirtschaftliche Arbeitsmaschine 1 derart einzustellen, dass die landwirtschaftliche Arbeitsmaschine 1 während der Pflege des ungeernteten Feldbestandes 3 die Feldgrenzen 28 nicht ohne eine explizite Freigabe seitens des Fahrers 20 überschreitet.

### Bezugszeichenliste

- 1: Landwirtschaftliche Arbeitsmaschine
- 2: landwirtschaftliches Feld
- 3: ungeernteter Feldbestand
- 4: Fahrgassen
- 5: erste Fahrgasse im Feldbereich
- 6: zweite Fahrgasse im Feldbereich
- 7: Fahrgasse im Vorgewendebereich
- 8: Traktor
- 9: frontseitiges Anbaugerät
- 10: heckseitiges Anbaugerät
- 11: Einstellvorrichtung
- 12: satellitenbasierte Informationen bezüglich der Fahrgassen
- 13: satellitenbasierte Positionsinformationen der landwirtschaftliche Arbeitsmaschine
- 14: Vorgewendebereich
- 15: Feldbereich
- 16: Rechenvorrichtung
- 17: Datenspeicher
- 18: externer Datenspeicher
- 19: Satellit
- 20: Fahrer
- 21: Datensatz
- 22: Feldbestandsinformationen
- 23: Wetterinformationen
- 24: weitere Standortinformationen
- 25: weitere Feldinformationen
- 26: Arbeitsmaschinenparameter
- 27: Betriebszustände
- 28: Feldgrenze
- 29: Längsachse
- 30: Querachse

## Patentansprüche

1. Landwirtschaftliche Arbeitsmaschine (1) zum landwirtschaftlichen Einsatz auf einem landwirtschaftlichen Feld (2), welches einen ungeernteten Feldbestand (3) und Fahrgassen (4, 5, 6, 7) aufweist,
- mit einem Traktor (8) und wenigstens einem am Traktor (8) gekoppelten Anbaugerät (9, 10) zur Pflege des ungeernteten Feldbestandes (3) des landwirtschaftlichen Feldes (2),
**dadurch gekennzeichnet,**
- **dass** die landwirtschaftliche Arbeitsmaschine (1) eine Einstellvorrichtung (11) aufweist, die dazu vorgesehen und eingerichtet ist, die landwirtschaftliche Arbeitsmaschine (1) in Abhängigkeit satellitenbasierter Informationen (12) bezüglich der Fahrgassen (4, 5, 6, 7) des landwirtschaftlichen Feldes (2) und in Abhängigkeit satellitenbasierter Positionsinformationen (13) der landwirtschaftliche Arbeitsmaschine (1) bezüglich des landwirtschaftlichen Feldes (2) derart einzustellen, dass die landwirtschaftliche Arbeitsmaschine (1) innerhalb eines Vorgewendebereiches (14) des landwirtschaftlichen Feldes (2) entlang einer Fahrgasse (7) des Vorgewendebereiches (14) fährt.

2. Landwirtschaftliche Arbeitsmaschine (1) nach Anspruch 1,
**dadurch gekennzeichnet,**
- **dass** die satellitenbasierten Informationen (12) bezüglich der Fahrgassen (4, 5, 6, 7) von einer landwirtschaftlichen Arbeitsmaschine während einer Aussaat auf diesem landwirtschaftlichen Feld (2) erfasst wurden, und/oder
- **dass** die satellitenbasierten Positionsinformationen (13) der landwirtschaftlichen Arbeitsmaschine (1) bezüglich des landwirtschaftlichen Feldes (2) während der Pflege des ungeernteten Feldbestandes (3) und daher erst nach der Aussaat auf diesem landwirtschaftlichen Feld (2) erfasst werden.

3. Landwirtschaftliche Arbeitsmaschine (1) nach Anspruch 1 oder 2,
**dadurch gekennzeichnet,**
- **dass** in einem Datenspeicher (17, 18) für mehrere landwirtschaftliche Felder die satellitenbasierten Informationen (12) bezüglich Fahrgassen (4, 5, 6, 7) hinterlegt sind,
- wobei die Einstellvorrichtung (11) dazu vorgesehen und eingerichtet ist, in Abhängigkeit der satellitenbasierten Positionsinformationen (13) der landwirtschaftliche Arbeitsmaschine (1) aus dem Datenspeicher (17, 18) die hinterlegte satellitenbasierten Informationen (12) bezüglich Fahrgassen (4, 5, 6, 7) zu ermitteln und zu verwenden, die sich auf das landwirtschaftlichen Feld (2) beziehen, auf dem sich die landwirtschaftliche Arbeitsmaschine (1) befindet und/oder befinden wird.

4. Landwirtschaftliche Arbeitsmaschine (1) nach einem der vorhergehenden Ansprüche, **dadurch gekennzeichnet,**
- **dass** die Einstellvorrichtung (11) dazu vorgesehen und eingerichtet ist, die landwirtschaftliche Arbeitsmaschine (1) in Abhängigkeit messtechnisch erfasster Betriebsparameter und den satellitenbasierten Informationen (12, 13) derart einzustellen, dass die landwirtschaftliche Arbeitsmaschine (1) innerhalb eines Feldbereiches (15) des landwirtschaftlichen Feldes (2) eine erste Fahrgasse (5) und eine davon beabstandete zweite Fahrgasse (6) abfährt,
- wobei die Einstellvorrichtung (11) dazu vorgesehen und eingerichtet ist, die landwirtschaftliche Arbeitsmaschine (1) derart einzustellen, dass die landwirtschaftliche Arbeitsmaschine (1) für eine Fahrt von der ersten Fahrgasse (5) in die zweite Fahrgasse (6) des Feldbereiches (15) den hierzu passenden Teil der Fahrgasse (7) des Vorgewendebereiches (14) abfährt.

5. Landwirtschaftliche Arbeitsmaschine (1) nach einem der vorhergehenden Ansprüche,
**dadurch gekennzeichnet,**
**dass** die landwirtschaftliche Arbeitsmaschine (1) ein frontseitiges Anbaugerät (9) und/oder ein heckseitiges Anbaugerät (10) aufweist.

6. Landwirtschaftliche Arbeitsmaschine (1) nach Anspruch 5,
**dadurch gekennzeichnet,**
**dass** die Einstellvorrichtung (11) dazu vorgesehen und eingerichtet ist, in Abhängigkeit der Fahrgassen (4, 5, 6, 7) das frontseitige Anbaugerät (9) und/oder das heckseitige Anbaugerät (10) einzustellen.

7. Landwirtschaftliche Arbeitsmaschine (1) nach einem der vorhergehenden Ansprüche,
**dadurch gekennzeichnet,**
**dass** die Einstellvorrichtung (11) dazu vorgesehen und eingerichtet ist, das am Traktor (8) gekoppelte Anbaugerät (9, 10) derart einzustellen, dass dieses Anbaugerät (9, 10) während des Einsatzes auf dem landwirtschaftlichen Feld (2) eine Beabstandung zum Erdboden des landwirtschaftlichen Feldes (2) und/oder eine Beabstandung zum ungeernteten Feldbestand (3) aufweist.

8. Landwirtschaftliche Arbeitsmaschine (1) nach einem der vorhergehenden Ansprüche,
**dadurch gekennzeichnet,**
**dass** das Anbaugerät (9, 10) als ein Pflanzenpflegegerät zur Pflege des Feldbestandes (3) ausgebildet ist.

9. Landwirtschaftliche Arbeitsmaschine (1) nach einem der vorhergehenden Ansprüche,
**dadurch gekennzeichnet,**
**dass** das Anbaugerät (9, 10) als ein Düngerstreuer zum Ausbringen von Düngemittel auf dem ungeernteten Feldbestand (3) ausgebildet ist, und/oder dass das Anbaugerät (9, 10) als ein Pflanzenschutzgerät zum Ausbringen von Pflanzenschutzmittel auf dem ungeernteten Feldbestand (3) ausgebildet ist.

10. Landwirtschaftliche Arbeitsmaschine (1) nach einem der Ansprüche 4 bis 9,
**dadurch gekennzeichnet,**
- **dass** die erste Fahrgasse (5) und die zweite Fahrgasse (6) des Feldbereiches (15) jeweils parallel zu einer Längsachse (29) des landwirtschaftlichen Feld (2) ausgerichtet sind,
- wobei die Fahrgasse (7) des Vorgewendebereiches (14) wenigstens einen Teil aufweist, der sich parallel zu einer Querachse (30) des landwirtschaftlichen Feld (2) erstreckt,
- wobei die Längsachse (29) und die Querachse (30) quer und/oder senkrecht zueinander ausgerichtet sind.

11. Landwirtschaftliche Arbeitsmaschine (1) nach Anspruch 10,
**dadurch gekennzeichnet,**
- **dass** die erste Fahrgasse (5) und die zweite Fahrgasse (6) des Feldbereiches (15) bezüglich der Querachse (30) voneinander beabstandet sind,
- wobei der Teil der Fahrgasse (7) des Vorgewendebereiches (14), der sich parallel zur Querachse (30) erstreckt, bezüglich der Querachse (30) zwischen der ersten Fahrgasse (5) und der zweiten Fahrgasse (6) des Feldbereiches (15) ausgebildet ist.

12. Landwirtschaftliche Arbeitsmaschine (1) nach einem der Ansprüche 4 bis 11,
**dadurch gekennzeichnet,**
**dass** der messtechnisch erfasste Betriebsparameter eine Feldbestandsinformation (22) bezüglich des ungeernteten Feldbestandes, eine Wetterinformation (23), eine weitere Standortinformation (24), eine weitere Feldinformation (25), einen weiteren Arbeitsmaschinenparameter (26) und/oder einen Betriebszustand (27) der landwirtschaftlichen Arbeitsmaschine (1) betrifft.

13. Landwirtschaftliche Arbeitsmaschine (1) nach Anspruch 12,
**dadurch gekennzeichnet,**
- **dass** die weiteren Feldinformation (25) Informationen bezüglich Feldgrenzen (28) des landwirtschaftlichen Feldes (2) aufweisen,
- wobei die Einstellvorrichtung (11) dazu vorgesehen und eingerichtet ist, die landwirtschaftliche Arbeitsmaschine (1) derart einzustellen, dass die landwirtschaftliche Arbeitsmaschine (1) während der Pflege des ungeernteten Feldbestandes (3) die Feldgrenzen (28) nicht überschreitet.

14. Landwirtschaftliche Arbeitsmaschine (1) nach einem der vorhergehenden Ansprüche,
**dadurch gekennzeichnet,**
**dass** die satellitenbasierten Informationen (12, 13) mittels mehreren Satelliten (19) erfasst wurden und/oder erfasst werden.

15. Datentechnische Bereitstellung von satellitenbasierten Informationen (12) bezüglich Fahrgassen (4, 5, 6, 7), die von einer landwirtschaftlichen Arbeitsmaschine während einer Aussaat auf einem landwirtschaftlichen Feld (2) erfasst wurden, für eine einstellungstechnische Verwendung mittels einer Einstellvorrichtung (11) einer weiteren landwirtschaftliche Arbeitsmaschine (1), nach einem der vorhergehenden Ansprüche, um diese weitere landwirtschaftliche Arbeitsmaschine (1) während einer Pflege eines durch die Aussaat entstandenen ungeernteten Feldbestandes (3) im Vorgewendebereich (14) des landwirtschaftlichen Feldes (2) einzustellen.

## Claims

1. Agricultural working machine (1) for agricultural use in an agricultural field (2) that has unharvested field crop (3) and tramlines (4, 5, 6, 7),
- having a tractor (8) and at least one add-on unit (9, 10), which is coupled to the tractor (8), for managing the unharvested field crop (3) of the agricultural field (2),
**characterized**
- **in that** the agricultural working machine (1) has a setting device (11) which is intended and configured to set the agricultural working machine (1) according to satellite-based information (12) relating to the tramlines (4, 5, 6, 7) of the agricultural field (2), and according to satellite-based positional information (13) of the agricultural working machine (1) relating to the agricultural field (2), in such a way that the agricultural working machine (1) travels within a headland region (14) of the agricultural field (2) along a tramline (7) of the headland region (14).

2. Agricultural working machine (1) according to Claim 1,
**characterized**
- **in that** the satellite-based information (12) relating to the tramlines (4, 5, 6, 7) was acquired by an agricultural working machine while sowing was being carried out in said agricultural field (2), and/or
- **in that** the satellite-based positional information (13) of the agricultural working machine (1) relating to the agricultural field (2) is acquired during management of the unharvested field crop (3) and therefore only after sowing has been carried out in said agricultural field (2).

3. Agricultural working machine (1) according to Claim 1 or 2,
**characterized**
- **in that** the satellite-based information (12) relating to tramlines (4, 5, 6, 7) is stored in a data memory (17, 18) for multiple agricultural fields,
- wherein the setting device (11) is intended and configured to ascertain and use from the data memory (17, 18), according to the satellite-based positional information (13) of the agricultural working machine (1), the stored satellite-based information (12) relating to tramlines (4, 5, 6, 7) that relates to the agricultural field (2) in which the agricultural working machine (1) is and/or will be situated.

4. Agricultural working machine (1) according to one of the preceding claims,
**characterized**
- **in that** the setting device (11) is intended and configured to set the agricultural working machine (1) according to metrologically detected operating parameters and the satellite-based information (12, 13) in such a way that the agricultural working machine (1) travels all the way along a first tramline (5) and a second tramline (6), spaced apart from said first tramline, within a field region (15) of the agricultural field (2),
- wherein the setting device (11) is intended and configured to set the agricultural working machine (1) in such a way that, for travelling from the first tramline (5) into the second tramline (6) of the field region (15), the agricultural working machine (1) travels all the way along the appropriate section of the tramline (7) of the headland region (14).

5. Agricultural working machine (1) according to one of the preceding claims,
**characterized**
**in that** the agricultural working machine (1) has a front-side add-on unit (9) and/or a rear-side add-on unit (10).

6. Agricultural working machine (1) according to Claim 5,
**characterized**
**in that** the setting device (11) is intended and configured to set the front-side add-on unit (9) and/or the rear-side add-on unit (10) according to the tramlines (4, 5, 6, 7).

7. Agricultural working machine (1) according to one of the preceding claims,
**characterized**
**in that** the setting device (11) is intended and configured to set the add-on unit (9, 10) coupled to the tractor (8) in such a way that, during use in the agricultural field (2), said add-on unit (9, 10) is spaced apart from the ground of the agricultural field (2) and/or is spaced apart from the unharvested field crop (3).

8. Agricultural working machine (1) according to one of the preceding claims,
**characterized**
**in that** the add-on unit (9, 10) is designed as a plant-management unit for managing the field crop (3).

9. Agricultural working machine (1) according to one of the preceding claims,
**characterized**
**in that** the add-on unit (9, 10) is designed as a fertiliser distributor for spreading fertiliser on the unharvested field crop (3), and/or
**in that** the add-on unit (9, 10) is designed as a plant protector for spreading plant-protection agent on the unharvested field crop (3).

10. Agricultural working machine (1) according to one of Claims 4 to 9,
**characterized**
- **in that** the first tramline (5) and the second tramline (6) of the field region (15) are each oriented parallel to a longitudinal axis (29) of the agricultural field (2),
- wherein the tramline (7) of the headland region (14) has at least one section which extends parallel to a transverse axis (30) of the agricultural field (2),
- wherein the longitudinal axis (29) and the transverse axis (30) are oriented transversely and/or perpendicularly to one another.

11. Agricultural working machine (1) according to Claim 10,
**characterized**
- **in that** the first tramline (5) and the second tramline (6) of the field region (15) are spaced apart from one another in relation to the transverse axis (30),
- wherein that section of the tramline (7) of the headland region (14) which extends parallel to the transverse axis (30) is formed between the first tramline (5) and the second tramline (6) of the field region (15) in relation to the transverse axis (30).

12. Agricultural working machine (1) according to one of Claims 4 to 11,
**characterized**
**in that** the metrologically detected operating parameter concerns a piece of field-crop information (22) relating to the unharvested field crop, a piece of weather information (23), further piece of location information (24), a further piece of field information (25), a further working-machine parameter (26) and/or an operating state (27) of the agricultural working machine (1).

13. Agricultural working machine (1) according to Claim 12,
**characterized**
- **in that** the further piece of field information (25) comprises information relating to field boundaries (28) of the agricultural field (2),
- wherein the setting device (11) is intended and configured to set the agricultural working machine (1) in such a way that the agricultural working machine (1) does not go beyond the field boundaries (28) during management of the unharvested field crop (3).

14. Agricultural working machine (1) according to one of the preceding claims,
**characterized**
**in that** the satellite-based information (12, 13) was acquired and/or is acquired by means of multiple satellites (19).

15. Provision in terms of data technology of satellite-based information (12) relating to tramlines (4, 5, 6, 7), that was acquired by an agricultural working machine while sowing was being carried out in an agricultural field (2), for use in terms of setting technology by means of a setting device (11) of a further agricultural working machine (1) according to one of the preceding claims, in order to set said further agricultural working machine (1) during management of unharvested field crop (3), which arose as a result of the sowing, in the headland region (14) of the agricultural field (2).

## Revendications

1. Machine de travail agricole (1) destinée à une utilisation agricole dans un champ agricole (2) qui présente des cultures de champ non récoltées (3) ainsi que des allées de circulation (4, 5, 6, 7),
- comprenant un tracteur (8) et au moins un équipement attelé (9, 10) accouplé au tracteur (8) et destiné aux soins des cultures de champ non récoltées (3) du champ agricole (2),
**caractérisée en ce que**
- la machine de travail agricole (1) présente un dispositif de réglage (11) qui est prévu et conçu pour régler la machine de travail agricole (1) en fonction d'informations basées sur satellite (12) concernant les allées de circulation (4, 5, 6, 7) du champ agricole (2), et en fonction d'informations de position basées sur satellite (13) de la machine de travail agricole (1) par rapport au champ agricole (2), de manière à ce que la machine de travail agricole (1) se déplace à l'intérieur d'une zone de tournière (14) du champ agricole (2), le long d'une allée de circulation (7) de la zone de tournière (14).

2. Machine de travail agricole (1) selon la revendication 1,
**caractérisée en ce que**
- les informations basées sur satellite (12) concernant les allées de circulation (4, 5, 6, 7) ont été recueillies par une machine de travail agricole au cours d'une opération de semis dans ce champ agricole (2), et/ou
- **en ce que** les informations de position basées sur satellite (13) de la machine de travail agricole (1) par rapport au champ agricole (2) sont recueillies pendant les soins des cultures de champ non récoltées (3), et par conséquent seulement après le semis dans ce champ agricole (2).

3. Machine de travail agricole (1) selon la revendication 1 ou 2,
**caractérisée en ce que**
- les informations basées sur satellite (12) concernant des allées de circulation (4, 5, 6, 7) sont enregistrées dans une mémoire de données (17, 18) pour plusieurs champs agricoles,
- le dispositif de réglage (11) étant prévu et conçu pour déterminer, en fonction des informations de position basées sur satellite (13) de la machine de travail agricole (1), à partir de la mémoire de données (17, 18), les informations basées sur satellite (12) enregistrées pour les allées de circulation (4, 5, 6, 7), qui concernent le champ agricole (2) dans lequel se trouve et/ou se trouvera la machine de travail agricole (1), et pour les utiliser.

4. Machine de travail agricole (1) selon une des revendications précédentes,
**caractérisée en ce que**
- le dispositif de réglage (11) est prévu et conçu pour régler la machine de travail agricole (1) en fonction de paramètres de fonctionnement, recueillis par des techniques de mesure, et des informations basées sur satellite (12, 13), de manière à ce que la machine de travail agricole (1), à l'intérieur d'une zone de champ (15) du champ agricole (2), parcoure une première allée de circulation (5) et une deuxième allée de circulation (6) espacée de celle-ci,
- le dispositif de réglage (11) étant prévu et conçu pour régler la machine de travail agricole (1) de manière à ce que, pour un déplacement de la première allée de circulation (5) à la deuxième allée de circulation (6) de la zone de champ (15), la machine de travail agricole (1) parcoure la partie adaptée à cet effet de l'allée de circulation (7) de la zone de tournière (14).

5. Machine de travail agricole (1) selon une des revendications précédentes,
**caractérisée en ce que**
la machine de travail agricole (1) comprend un équipement attelé (9) côté frontal et/ou un équipement attelé (10) côté arrière.

6. Machine de travail agricole (1) selon la revendication 5,
**caractérisée en ce que**
le dispositif de réglage (11) est prévu et conçu pour régler l'équipement attelé (9) côté frontal et/ou l'équipement attelé (10) côté arrière en fonction des allées de circulation (4, 5, 6, 7).

7. Machine de travail agricole (1) selon une des revendications précédentes,
**caractérisée en ce que**
le dispositif de réglage (11) est prévu et conçu pour régler l'équipement attelé (9, 10) accouplé au tracteur (8), de manière à ce que, pendant l'utilisation dans le champ agricole (2), ledit équipement attelé (9, 10) présente une distance par rapport au sol du champ agricole (2) et/ou une distance par rapport aux cultures de champ non récoltées (3).

8. Machine de travail agricole (1) selon une des revendications précédentes,
**caractérisée en ce que**
l'équipement attelé (9, 10) est réalisé sous la forme d'un équipement de soins de plantes destiné aux soins des cultures de champ (3).

9. Machine de travail agricole (1) selon une des revendications précédentes,
**caractérisée en ce que**
l'équipement attelé (9, 10) est réalisé sous la forme d'un épandeur d'engrais destiné à distribuer de l'engrais sur les cultures de champ non récoltées (3), et/ou
**en ce que** l'équipement attelé (9, 10) est réalisé sous la forme d'un équipement phytosanitaire destiné à distribuer des produits phytosanitaires sur les cultures de champ non récoltées (3).

10. Machine de travail agricole (1) selon une des revendications 4 à 9,
**caractérisée en ce que**
- la première allée de circulation (5) et la deuxième allée de circulation (6) de la zone de champ (15) sont orientées chacune parallèlement à un axe longitudinal (29) du champ agricole (2),
- l'allée de circulation (7) de la zone de tournière (14) comportant au moins une partie qui s'étend parallèlement à un axe transversal (30) du champ agricole (2),
- l'axe longitudinal (29) et l'axe transversal (30) étant orientées transversalement et/ou perpendiculairement l'un par rapport à l'autre.

11. Machine de travail agricole (1) selon la revendication 10,
**caractérisée en ce que**
- la première allée de circulation (5) et la deuxième allée de circulation (6) de la zone de champ (15) sont espacées l'une de l'autre par rapport à l'axe transversal (30),
- la partie de l'allée de circulation (7) de la zone de tournière (14) qui s'étend parallèlement à l'axe transversal (30) étant réalisée, par rapport à l'axe transversal (30), entre la première allée de circulation (5) et la deuxième allée de circulation (6) de la zone de champ (15).

12. Machine de travail agricole (1) selon une des revendications 4 à 11,
**caractérisée en ce que**
le paramètre de fonctionnement recueilli par des techniques de mesure concerne une information de cultures de champ (22) en rapport avec les cultures de champ non récoltées, une information météorologique (23), une information de site (24) supplémentaire, une information de champ (25) supplémentaire, un paramètre de machine de travail (26) supplémentaire et/ou un état de fonctionnement (27) de la machine de travail agricole (1).

13. Machine de travail agricole (1) selon la revendication 12,
**caractérisée en ce que**
- les informations de champ (25) supplémentaires comportent des informations concernant les limites de champ (28) du champ agricole (2),
- le dispositif de réglage (11) étant prévu et conçu pour régler la machine de travail agricole (1) de manière à ce que la machine de travail agricole (1) ne dépasse pas les limites du champ (28) au cours des soins des cultures de champ non récoltées (3).

14. Machine de travail agricole (1) selon une des revendications précédentes,
**caractérisée en ce que**
les informations basées sur satellite (12, 13) ont été et/ou sont recueillies au moyen de plusieurs satellites (19).

15. Mise à disposition sur le plan informatique d'informations basées sur satellite (12) concernant des allées de circulation (4, 5, 6, 7), qui ont été recueillies par une machine de travail agricole (1) au cours d'une opération de semis dans un champ agricole (2), en vue d'une utilisation sur le plan de la technique de réglage au moyen d'un dispositif de réglage (11) d'une autre machine de travail agricole (1), selon une des revendications précédentes, aux fins de régler cette machine de travail agricole (1) supplémentaire pendant des soins des cultures non récoltées d'un champ (3), issues du semis, dans la zone de tournière (14) du champ agricole (2).
